# EUROPÄISCHE PATENTSCHRIFT

(11) **EP 1 091 106 B1**
(45) Veröffentlichungstag und Bekanntmachung des Hinweises auf die Patenterteilung: **14.06.2006**
(21) Anmeldenummer: 00120190.4
(22) Anmeldetag: 22.09.2000
(51) Int. Cl.: F02D 23/00, F02D 21/08, F02D 23/02, F02B 37/12, F02D 41/18, G01F 1/86

(54) **Verfahren zur Bestimmung eines Abgasgegendruckes an einer Turbine**
Method for determining engine exhaust backpressure at a turbine
Méthode d'évaluation de la contre-pression des gaz d'échappement au niveau de la turbine

(30) Priorität: 07.10.1999 DE 19948136
(43) Veröffentlichungstag der Anmeldung: 11.04.2001
(73) Patentinhaber: Volkswagen Aktiengesellschaft, 38436 Wolfsburg (DE)
(72) Erfinder: Rebohl, Thorsten, 38100 Braunschweig (DE); Jeschke, Jens, 38106 Braunschweig (DE); Nitzke, Hans-Georg, 38547 Wettmershagen (DE)

(56) Entgegenhaltungen:
- EP-A- 0 417 984
- EP-A- 0 845 586
- WO-A-99/43935
- DE-A- 4 214 648
- US-A- 3 523 418
- US-A- 5 079 921
- US-A- 6 067 800

## Beschreibung

Die Erfindung betrifft ein Verfahren zur Bestimmung eines Abgasgegendruckes an einer Turbine, die in einem Abgaskanal stromab einer Brennkraftmaschine angeordnet ist, mit den im Oberbegriff des Anspruchs 1 genannten Merkmalen.

Modernen Brennkraftmaschinen sind häufig Turbinen zugeordnet, die in Abhängigkeit vorgebbarer Steuerungsparameter zum Transport eines Abgases der Brennkraftmaschine dienen. So ist beispielsweise bekannt, Turbinen dieser Art als Abgasturbolader einzusetzen. Eine wichtige Kenngröße, die eine exakte Steuerung der Turbinen ermöglichen würde, ist ein Abgasgegendruck, der sich vor der Turbine durch das anströmende Abgas einstellt. Aufgrund der hohen Temperaturen und Partikelbeladungen der Abgase ist eine direkte Erfassung des Abgasgegendruckes sehr aufwendig, und entsprechende Drucksensoren sind nur mit erheblichen Kosten integrierbar.

Der Erfindung liegt die Aufgabe zugrunde, ein Verfahren zur Verfügung zu stellen, das es in einfacher Weise ermöglicht, den Abgasgegendruck zu bestimmen, ohne daß zusätzliche bauliche Maßnahmen erfolgen müssen.
Erfindungsgemäß wird diese Aufgabe durch das Verfahren zur Bestimmung des Abgasgegendruckes mit den im Anspruch 1 genannten Merkmalen gelöst. Dadurch, daß anhand
a) einer gemessenen oder berechneten Abgastemperatur vor der Turbine,
b) eines berechneten Abgasmassenstromes,
c) eines gemessenen oder berechneten Druckes nach der Turbine und
d) einem Tastverhältnis eines Ladedruckstellers
der Abgasgegendruck an der Turbine berechnet wird, ist es vorteilhaft möglich, auf die Anordnung zusätzlicher Drucksensoren vor der Turbine zu verzichten. Nach dem erfindungsgemäßen Verfahren kann die Bestimmung des Abgasgegendruckes unabhängig von der gegebenen Turbinengeometrie durchgeführt werden.

Die Abgastemperatur vor der Turbine läßt sich vorzugsweise anhand eines Modells, das eine Saugrohrtemperatur, eine eingespritzte Kraftstoffmasse, eine Drehzahl der Brennkraftmaschine und einen Einspritzbeginn umfaßt, berechnen. Auf diese Weise kann auch auf einen Temperatursensor vor der Turbine verzichtet werden, was zu einer weiteren Reduktion der Herstellungskosten führt.

Der Abgasmassenstrom wird vorzugsweise anhand eines Modells, in das ein Massenvolumenstrom der Ansaugluft und die eingespeiste Kraftstoffmasse eingehen, bestimmt. Insgesamt kann auf diese Weise der ansonsten nicht direkt bestimmbare Abgasmassenstrom erfaßt werden und der Bestimmung des Abgasgegendruckes zugrunde gelegt werden.

In einer weiteren bevorzugten Ausgestaltung des Verfahrens kann auf die direkte Messung des Druckes nach der Turbine und damit auf einen Drucksensor in diesem Bereich verzichtet werden. Der Druck nach der Turbine wird hierbei durch ein Modell bestimmt, in das wiederum der Abgasmassenstrom und eine Temperatur nach der Turbine einfließen. Die Temperatur nach der Turbine kann beispielsweise über einen Temperatursensor gemessen werden.

Als vorteilhaft hat es sich ferner erwiesen, eine Drehzahl des Turboladers zu berücksichtigen, wobei vorzugsweise die Drehzahl des Turboladers nicht direkt erfaßt, sondern mit Hilfe eines Modells simuliert wird. In ein solches Modell fließen Parameter ein, wie eine Umgebungstemperatur, ein Umgebungsdruck und ein Saugrohrdruck. Auf einen zusätzlichen Drehzahlmesser kann somit verzichtet werden.

Weitere bevorzugte Ausgestaltungen des Verfahrens ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: eine schematische Anordnung einer Brennkraftmaschine mit einem Abgasturbolader und anderen betriebsnotwendigen Einrichtungen;
- Figur 2: ein Blockschaltbild zur Bestimmung eines Abgasgegendruckes an einer Turbine und
- Figur 3: ein Blockschaltbild einer alternativen Bestimmung des Abgasgegendruckes an der Turbine.

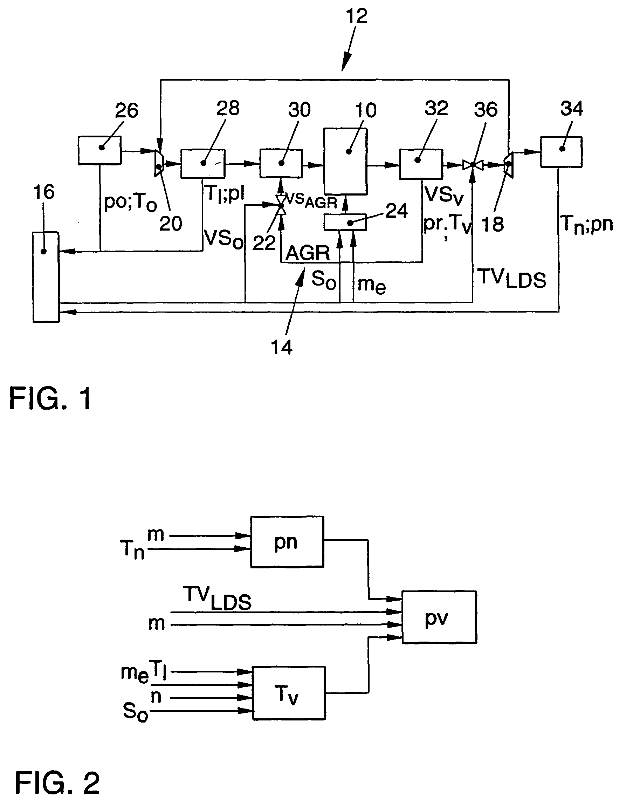

Die Figur 1 zeigt in schematischer Weise eine Anordnung einer Brennkraftmaschine 10 mit einem Abgasturbolader 12, einer Abgasrückführeinrichtung 14 und einem Motorsteuergerät 16. Der Abgasturbolader 12 umfaßt dabei zumindest eine Turbine 18, die mit einem Kompressor 20 mechanisch gekuppelt ist. Ansaugseitig der Brennkraftmaschine 10 ist der Kompressor 20 dabei in einem hier nicht dargestellten Saugrohr angeordnet, während sich abgasseitig die Turbine 18 in einem hier ebenfalls nicht dargestellten Abgaskanal befindet.

Die Abgasrückführeinrichtung 14 kann in bekannter Weise zur Beeinflussung einer Zusammensetzung eines zu verbrennenden Luft-Kraftstoff-Gemisches genutzt werden. Dazu wird abgasseitig ein Abgasvolumen entnommen und in das Saugrohr eingelassen. Eine Regelung der Abgasrückführung kann unter anderem über ein Abgasventil 22 und ein hier nicht dargestelltes Drosselklappenventil, das sich in dem Saugrohr befindet, erfolgen.

Ferner ist der Brennkraftmaschine 10 ein Einspritzsystem 24 zugeordnet. Über das Einspritzsystem 24 kann in bekannter Weise beispielsweise eine Einspritzzeit, ein Einspritzbeginn So und/oder eine eingespritzte Kraftstoffmenge mₑ geregelt werden.

Der gesamte Regelprozeß sowohl des Abgasturboladers 12, der Abgasrückführeinrichtung 14 als auch des Einspritzsystems 24 kann mit Hilfe des Motorsteuergerätes 16 erfolgen. Dazu müssen über geeignete Sensoren dem Motorsteuergerät 16 die notwendigen Eingangsgrößen zur Verfügung gestellt werden, infolgedessen entsprechende Stellsignale an die Systemkomponenten übermittelt werden. Die Figur 1 zeigt beispielhaft insgesamt fünf Meßpunkte (26, 28, 30, 32, 34), an denen bestimmte Parameter der Brennkraftmaschine 10 erfaßt werden können. Auf die dort erfaßten Größen und deren Verwendung mit Hinblick auf die Ermittlung eines Abgasgegendruckes pᵥ vor der Turbine 18 wird im folgenden näher eingegangen.

In der Figur 2 ist ein Blockschaltbild dargestellt, das die zur Bestimmung des Abgasgegendruckes pᵥ notwendigen Eingangsgrößen und gegebenenfalls deren Ermittlung aus anderen im Motorsteuergerät 16 hinterlegten Parametern erläutern soll. Insgesamt umfaßt dieses Modell vier Eingangsgrößen, die entweder direkt bestimmbar oder selbst anhand von Modellen zunächst ermittelt werden müssen.

Als erste Eingangsgröße ist ein Abgasmassenstrom m zu bestimmen. Da eine direkte Erfassung des Abgasmassenstromes m praktisch nicht möglich ist, kann dieser anhand eines Modells berechnet werden. In das Modell fließt ein Massenvolumenstrom VS₀ der Ansaugluft (Meßpunkte 26, 28) und die über das Einspritzsystem 24 zugeführte Kraftstoffmasse mₑ ein.

Als zweite Eingangsgröße dient ein Druck pₙ, der sich hinter der Turbine 18 in dem Abgaskanal einstellt (Meßpunkt 34). Der Druck pₙ kann entweder direkt über einen am Meßpunkt 34 installierten Drucksensor erfaßt werden oder kann, wenn auch auf diesen Sensor verzichtet werden soll, über ein Modell bestimmt werden. Dem Modell des Druckes pₙ liegt dabei zum einen der Abgasmassenstrom m als auch eine über einen Temperatursensor meßbare Temperatur Tₙ nach der Turbine 18 (Meßpunkt 34)zugrunde.

Weiterhin muß als dritte Eingangsgröße eine Temperatur T_{V} vor der Turbine (Meßpunkt 32) bestimmt werden. Entweder befindet sich in diesem Bereich des Abgaskanals ein Temperatursensor, der die direkte Bestimmung der Größe erlaubt oder die Temperatur T_{V} muß über ein Modell ermittelt werden. In das Modell der Temperatur T_{V} fließen Parameter ein, wie die Saugrohrtemperatur T_{I} (Meßpunkte 28, 30) die Kraftstoffmasse mₑ, die Drehzahl n der Brennkraftmaschine und der Einspritzbeginn S₀.

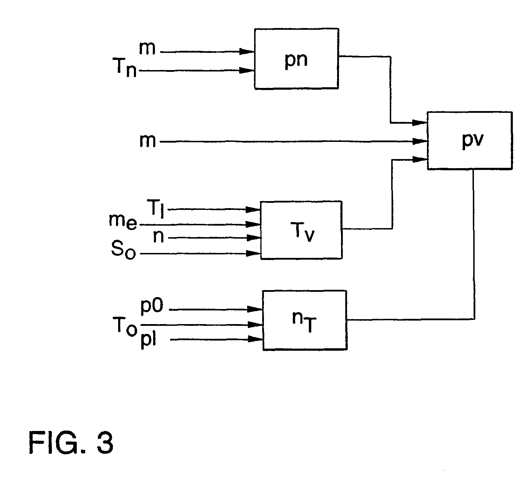

Ferner muß als vierte Eingangsgröße ein Tastverhältnis TV_{LDS} eines Ladedruckstellers 36 bei der Bestimmung des Abgasgegendruckes Pᵥ berücksichtigt werden. Ergänzend dazu kann aber auch eine Drehzahl n_{T} der Turbine 18 - wie in der Figur 3 in einem Blockschaltbild dargestellt - bei der Bestimmung des Abgasgegendruckes pᵥ verwendet werden. Hierdurch ergibt sich eine verbesserte, insbesondere genauere Bestimmung des Abgasgegendruckes. Entweder wird die Drehzahl n_{T} über einen Drehzahlmesser bestimmt, oder die Drehzahl n_{T} wird anhand eines Modells der Verdichterseite des Turboladers 12 (des Verdichters 20) simuliert. Das Modell umfaßt dabei Parameter wie einen Umgebungsdruck p₀ und eine Umgebungstemperatur T₀ (Meßpunkt 26) sowie einen Saugrohrdruck p_{I} (Meßpunkte 28, 30), der sich in dem Ansaugrohr einstellt.

## Patentansprüche

1. Verfahren zur Bestimmung eines Abgasgegendruckes an einer Turbine, die an einem Abgaskanal einer Brennkraftmaschine angeordnet ist,
**dadurch gekennzeichnet, daß**
anhand
a) einer gemessenen oder berechneten Abgastemperatur (Tᵥ) vor der Turbine (18),
b) eines berechneten Abgasmassenstromes (m),
c) eines gemessenen oder berechneten Druckes (pₙ) nach der Turbine (18) und
d) einem Tastverhältnis (TV_{LDS}) eines Ladedruckstellers (36)
der Abgasgegendruck (pᵥ) an der Turbine (18) berechnet wird.

2. Verfahren nach Anspruch 1,
**dadurch gekennzeichnet, daß**
die Abgastemperatur (Tᵥ) vor der Turbine (18) anhand eines Modells, das eine Saugrohrtemperatur (T_{I}), eine Kraftstoffmasse (mₑ), eine Drehzahl (n) der Brennkraftmaschine und einen Einspritzbeginn (so) umfaßt, berechnet wird.

3. Verfahren nach den Ansprüchen 1 oder 2,
**dadurch gekennzeichnet, daß**
der Abgasmassenstrom (m) anhand eines Modells, das einen Volumenstrom (VS₀) der Ansaugluft und die Kraftstoffmasse (mₑ) umfaßt, berechnet wird.

4. Verfahren nach Anspruch 3,
**dadurch gekennzeichnet, daß**
in das Modell für den Abgasmassenstrom (m) zusätzlich eine Abgasrückführrate (AGR) einfließt.

5. Verfahren nach einem der vorhergehenden Ansprüche,
**dadurch gekennzeichnet, daß**
der Druck (pₙ) nach der Turbine (18) anhand eines Modells, das den Abgasmassenstrom (m) und eine Temperatur (Tₙ) nach der Turbine (18) umfaßt, berechnet wird.

6. Verfahren nach einem der vorhergehenden Ansprüche,
**dadurch gekennzeichnet, daß**
zusätzlich eine Drehzahl (n_{T}) des Turboladers (12) zur Bestimmung des Abgasgegendruckes verwendet wird.

7. Verfahren nach Anspruch 6,
**dadurch gekennzeichnet, daß**
die Drehzahl (n_{T}) des Turboladers (12) anhand eines Modells der Verdichterseite (Verdichter 20) des Turboladers (12), das einen Umgebungsdruck (p₀), eine Umgebungstemperatur (T₀) und einen Saugrohrdruck (p_{I}) umfaßt, berechnet wird.

## Claims

1. Method for determining an exhaust-gas back pressure at a turbine which is arranged at an exhaust-gas duct of an internal combustion engine, **characterized in that** the exhaust-gas back pressure (pᵥ) at the turbine (18), is calculated on the basis of
a) a measured or calculated exhaust-gas temperature (Tᵥ) upstream of the turbine (18),
b) a calculated exhaust-gas mass flow (m),
c) a measured or calculated pressure (pₙ) downstream of the turbine (18) and
d) a duty factor (TV_{LDS}) of a boost pressure adjuster (36) .

2. Method according to Claim 1, **characterized in that** the exhaust-gas temperature (Tᵥ) upstream of the turbine (18) is calculated on the basis of a model which comprises an induction pipe temperature (T_{I}), a fuel mass (mₑ), an engine speed (n) of the internal combustion engine and a start-up injection (so).

3. Method according to Claim 1 or 2, **characterized in that** the exhaust-gas mass flow (m) is calculated on the basis of a model which comprises a volumetric flow (VS₀) of the intake air and the fuel mass (mₑ).

4. Method according to Claim 3, **characterized in that** an exhaust-gas recirculation rate (EGR) is additionally input into the model for the exhaust-gas mass flow (m).

5. Method according to one of the preceding claims, **characterized in that** the pressure (pₙ) downstream of the turbine (18) is calculated on the basis of a model which comprises the exhaust-gas mass flow (m) and a temperature (Tₙ) downstream of the turbine (18).

6. Method according to one of the preceding claims, **characterized in that** a rotational speed (n_{T}) of the turbocharger (12) is additionally used to determine the exhaust-gas back pressure.

7. Method according to Claim 6, **characterized in that** the rotational speed (n_{T}) of the turbocharger (12) is calculated on the basis of a model of the compressor side (compressor 20) of the turbocharger (12), which comprises an ambient pressure (p₀), an ambient temperature (T₀) and an induction pipe pressure (p_{I}).

## Revendications

1. Procédé de détermination d'une contre-pression de gaz d'échappement au niveau d'une turbine qui est disposée sur un canal de gaz d'échappement d'un moteur à combustion interne,
**caractérisé en ce que**,
à partir
a) d'une température (Tᵥ) mesurée ou calculée du gaz d'échappement en amont de la turbine (18),
b) d'un flux massique (m) calculé du gaz d'échappement,
c) d'une pression (Pₙ) mesurée ou calculée en aval de la turbine (18) et
d) d'un rapport de palpage (TV_{LDS}) d'un régulateur de pression d'admission (36),
on calcule la contre-pression (pᵥ) du gaz d'échappement au niveau de la turbine (18).

2. Procédé selon la revendication 1,
**caractérisé en ce que**
la température (Tᵥ) du gaz d'échappement est calculée en amont de la turbine (18) à partir d'un modèle qui comprend une température de tuyau d'aspiration (T_{I}), une masse de carburant (mₑ), un régime (n) du moteur à combustion interne et un début d'injection (So).

3. Procédé selon la revendication 1 ou 2,
**caractérisé en ce que**
le flux massique (m) du gaz d'échappement est calculé à partir d'un modèle qui comprend un flux volumique (VS₀) de l'air aspiré et la masse de carburant (mₑ).

4. Procédé selon la revendication 3,
**caractérisé en ce que,**
dans le modèle pour le flux massique (m) du gaz d'échappement s'intègre en plus une vitesse de refoulement du gaz d'échappement (AGR).

5. Procédé selon l'une quelconque des revendications précédentes,
**caractérisé en ce que**
la pression (pₙ) en aval de la turbine (18) est calculée à partir d'un modèle qui comprend le flux massique (m) du gaz d'échappement et une température (Tₙ) en aval de la turbine (18).

6. Procédé selon l'une quelconque des revendications précédentes,
**caractérisé en ce que**
on utilise en supplément un régime (n_{T}) du turbocompresseur (12) pour déterminer la contre-pression du gaz d'échappement.

7. Procédé selon la revendication 6,
**caractérisé en ce que**
le régime (n_{T}) du turbocompresseur (12) est calculé à partir d'un modèle du côté compresseur (compresseur 20) du turbocompresseur (12) qui comprend une pression environnementale (P₀), une température environnementale (T₀) et une pression de tuyau d'aspiration (p_{I}).
